# EUROPEAN PATENT APPLICATION

(11) **EP 4 607 614 A1**
(43) Date of publication of application: **27.08.2025**
(21) Application number: 24817465.8
(22) Date of filing: 11.11.2024
(51) Int. Cl.: H01M 4/505, H01M 4/525, H01M 4/485, H01M 4/131, H01M 10/0525

(54) **LITHIUM-RICH MANGANESE-BASED POSITIVE ELECTRODE MATERIAL AND PREPARATION METHOD THEREFOR, POSITIVE ELECTRODE SHEET, BATTERY AND ELECTRONIC EQUIPMENT**

(30) Priority: 25.12.2023 CN 202311794377
(71) Applicant: Tianjin B&M Science And Technology Co., Ltd., Tianjin 300384 (CN)
(72) Inventor: LI, Honglei, Binhai New Area Tianjin 300384 (CN); TANG, Miao, Binhai New Area Tianjin 300384 (CN); XU, Ning, Binhai New Area Tianjin 300384 (CN)
(74) Representative: Ström & Gulliksson AB
(86) International application number: PCT/CN2024/131204
(87) International publication number: WO 2025/139414

(57) **Abstract**

The present application provides a lithium-rich manganese-based positive electrode material and a production method, a positive electrode sheet, a battery and an electronic device thereof. The lithium-rich manganese-based positive electrode material comprises a first particle and a second particle. The first particle satisfies chemical formula (1), and the second particle satisfies chemical formula (2): aLi₂O·bLi₂MnO₃·cLiX_{α}X'_{β}O₂ (1), xLi₂O·yLi₂MnO₃·zLiY_{γ}Y'_{δ}O₂ (2), wherein in formula (1), -0.1≤a≤0, 0<b≤0.4, b+a>0, b+c-a=1; in formula (2), 0≤x≤0.1, 0.4<y<1, x+y+z=1; in formula (1) and formula (2), X and Y each independently include one or more of Ni and Co, X' and Y' each independently include one or more of Mn, Al, Na, Mg, B, Ti, Y, Zr, Nb, Sn, La, Ce, Ta and W, and 0≤β≤0.5≤α≤1, 0≤δ≤0.5≤γ≤1, α+β=1, γ+δ=1; the lithium-oxygen ratio of the first particle is R_{A}=(2a+2b+c)/(a+3b+2c), and satisfies 1/2<R_{A}<7/12; the lithium-oxygen ratio of the second particle is R_{B}=(2x+2y+z)/(x+3y+2z), and satisfies R_{A}<R_{B}<5/7. The lithium-rich manganese-based positive electrode material provided in the present application has high long-cycle stability.

## Description

This application claims the priority of Chinese Patent Application No. 202311794377.4, filed with the China National Intellectual Property Administration on December 25, 2023, and titled with "LITHIUM-RICH MANGANESE-BASED POSITIVE ELECTRODE MATERIAL AND PRODUCTION METHOD, POSITIVE ELECTRODE SHEET, BATTERY AND ELECTRONIC DEVICE THEREOF", which is hereby incorporated by reference in its entirety.

### FIELD

The present disclosure relates to the technical field of electrochemistry, and in particular to a lithium-rich manganese-based positive electrode material and a production method, a positive electrode sheet, a battery and an electronic device thereof.

### BACKGROUND

Secondary batteries represented by lithium-ion batteries have the advantages of high operating voltage, high energy density, good safety and no memory effect, and have achieved great success in the fields of portable electronic devices, electric vehicles and hybrid vehicles. At present, among traditional secondary batteries, lithium-rich manganese-based laminated positive electrode materials have a high specific capacity of more than 250 mAh/g and a high operating voltage of 4.8V, and are low in cost, which has attracted widespread attention from researchers. However, the current lithium-rich manganese-based laminated positive electrode materials have severe capacity and voltage decay during long cycles, showing poor long-cycle stability.

### SUMMARY

Based on this, the present application provides a lithium-rich manganese-based positive electrode material with high long-cycle stability and a production method, a positive electrode sheet, a battery and an electronic device thereof.

A first aspect of the present application provides a lithium-rich manganese-based positive electrode material, comprising a first particle and a second particle, wherein the first particle satisfies chemical formula (1) and the second particle satisfies chemical formula (2):

aLi₂O·bLi₂MnO₃·cLiX_{α}X'_{β}O₂ (1),

xLi₂O·yLi₂MnO₃·zLiY_{γ}Y'_{δ}O₂ (2),

in formula (1), -0.1≤a≤0, 0<b≤0.4, b+a>0, b+c-a=1;
in formula (2), 0≤x≤0.1, 0.4≤y<1, x+y+z=1;
in formula (1) and formula (2), X and Y each independently include one or more of Ni, and Co, X' and Y' each independently include one or more of Mn, Al, Na, Mg, B, Ti, Y, Zr, Nb, Sn, La, Ce, Ta and W, and 0≤β≤0.5≤α≤1, 0≤δ≤0.5≤γ≤1, α+β=1, γ+δ=1;
a lithium-oxygen ratio of the first particle is R_{A}=(2a+2b+c)/(a+3b+2c), and satisfies 1/2<R_{A}<7/12; and
a lithium-oxygen ratio of the second particle is R_{B}=(2x+2y+z)/(x+3y+2z), and satisfies R_{A}<R_{B}<5/7.

In some embodiments of the present application, in the lithium-rich manganese-based positive electrode material, the first particle and the second particle have a mass percentage of w_{A} and w_{B}, the first particle and the second particle have a molar mass of M_{A} and M_{B}, and a lithium-oxygen ratio of the lithium-rich manganese-based positive electrode material is R=(R_{A}w_{A}M_{B}+R_{B}w_{B}M_{A})/(w_{A}M_{B}+w_{B}M_{A}), and 0.5<R≤0.6.

In some embodiments of the present application, the second particle comprises a core and a shell covering at least a portion of the surface of the core, the core satisfies chemical formula (2), and the shell comprises a conductive carbon material;
optionally, a specific surface area of the core is 0.1 m²/g to 3 m²/g;
optionally, a mass percentage of the conductive carbon material in the second particle is 0.1% to 5%;
optionally, the conductive carbon material includes one or more of acetylene black, Ketjen black, conductive graphite, carbon fiber, graphene, multi-walled carbon nanotubes and single-walled carbon nanotubes.

In some embodiments of the present application, the first particle and the second particle each independently comprise a primary particle;
optionally, an average particle size D'_{A} of the primary particle of the first particle and an average particle size D'_{B} of the primary particle of the second particle satisfy: D'_{A}<D'_{B}<2 µm;
optionally, a volume median particle size Dv50₁ of the first particle is 3 µm to 16 µm, and a volume median particle size Dv50₂ of the second particle is 2 µm to 7 µm;
optionally, a specific surface area of the first particle is 1 m²/g to 5 m²/g, and a specific surface area of the second particle is 0.1 m²/g to 20 m²/g.

In some embodiments of the present application, at least one of the following conditions is met:
(1) a volume median particle size Dv50 of the lithium-rich manganese-based positive electrode material is 3 µm to 16 µm;
(2) a specific surface area of the lithium-rich manganese-based positive electrode material is 1 m²/g to 5 m²/g;
(3) a water content in the lithium-rich manganese-based positive electrode material is <500 ppm;
(4) a LiOH content in the lithium-rich manganese-based positive electrode material is <3000 ppm;
(5) a Li₂CO₃ content in the lithium-rich manganese-based positive electrode material is <3000 ppm.

A second aspect of the present application provides a method for producing a lithium-rich manganese-based positive electrode material, comprising:
mixing a first particle with a second particle to produce the lithium-rich manganese-based positive electrode material, wherein the first particle satisfies chemical formula (1) and the second particle satisfies chemical formula (2):

aLi₂O·bLi₂MnO₃·cLiX_{α}X'_{β}O₂ (1),

xLi₂O·yLi₂MnO₃·zLiY_{γ}Y'_{δ}O₂ (2),

in formula (1), -0.1≤a≤0, 0<b≤0.4, b+a>0, b+c-a=1;
in formula (2), 0≤x≤0.1, 0.4<y<1, x+y+z=1;
in formula (1) and formula (2), X and Y each independently include one or more of Ni and Co, X' and Y' each independently include one or more of Mn, Al, Na, Mg, B, Ti, Y, Zr, Nb, Sn, La, Ce, Ta and W, and 0≤β≤0.5≤α≤1, 0≤δ≤0.5≤γ≤1, α+β=1, y+δ=1;
a lithium-oxygen ratio of the first particle is R_{A}=(2a+2b+c)/(a+3b+2c), and satisfies 1/2<R_{A}<7/12; and
a lithium-oxygen ratio of the second particle is R_{B}=(2x+2y+z)/(x+3y+2z), and satisfies R_{A}<R_{B}<5/7.

In some embodiments of the present application, the mass percentage of the first particle is w_{A}, and 60%≤w_{A}<100%, and the mass percentage of the second particle is w_{B}, and 0<w_{B}≤40%.

In some embodiments of the present application, the first particle is produced by:
subjecting a first mixture comprising a first precursor and a first lithium source to a first sintering treatment to produce the first particle, wherein the first precursor comprises manganese element, an X element, and an X' element;
optionally, the first sintering treatment comprises:
heating the first mixture to 300°C to 600°C at a heating rate of 1°C/min to 10°C/min. keeping at this temperature for 2 h to 8 h, then heating the first mixture to 750°C to 1000°C at a heating rate of 1°C/min to 10°C/min, and keeping at this temperature for 8 h to 20 h;
optionally, the first precursor includes one or more of a carbonate of manganese, an X element and an X' element, a hydroxide of manganese, an X element and an X' element, and an oxide of manganese, an X element and an X' element;
optionally, the first lithium source includes one or more of lithium hydroxide, lithium carbonate, lithium nitrate, lithium chloride, lithium oxide and lithium peroxide;
optionally, a ratio of the molar number of lithium element in the first lithium source to the total molar number of metal elements in the first precursor is 1.0-1.45:1;
optionally, a specific surface area of the first precursor is 10 m²/g to 100 m²/g;
optionally, a median particle size D50₁ of the first precursor is 3 µm to 16 µm.

In some embodiments of the present application, the second particle is produced by:
subjecting a second mixture comprising a second precursor and a second lithium source to a second sintering treatment to obtain a sintered product, wherein the second precursor comprises manganese element, an Y element, and an Y' element;
subjecting the sintered product to a coating treatment to produce the second particle;
optionally, the second sintering treatment comprises:
heating the second mixture to 300°C to 600°C at a heating rate of 1°C/min to 10°C/min, keeping at this temperature for 2 h to 8 h, then heating the second mixture to 900°C to 1200°C at a heating rate of 1°C/min to 10°C/min, and keeping at this temperature for 1 h to 5 h, and cooling the second mixture to 700°C to 900°C before keeping at this temperature for 6 h to 15 h;
optionally, the second precursor includes one or more of a carbonate of manganese, an Y element and an Y' element, a hydroxide of manganese, an Y element and an Y' element, and an oxide of manganese, an Y element and an Y' element;
optionally, the second lithium source includes one or more of lithium hydroxide, lithium carbonate, lithium nitrate, lithium chloride, lithium oxide and lithium peroxide;
optionally, a ratio of the molar number of lithium element in the second lithium source to the total molar number of metal elements in the second precursor is 1.4-2.25: 1;
optionally, a specific surface area of the second precursor is 5 m²/g to 50 m²/g;
optionally, a median particle size D50₂ of the second precursor is 1.5 µm to 8 µm.

In some embodiments of the present application, the coating treatment comprises:
mixing the sintered product with a conductive carbon material;
optionally, a mass ratio of the conductive carbon material to the sintered product is (0.1-3): 100;
optionally, the conductive carbon material includes one or more of acetylene black, Ketjen black, conductive graphite, carbon fiber, graphene, multi-walled carbon nanotubes, and single-walled carbon nanotubes.

A third aspect of the present application provides a positive electrode sheet, comprising the lithium-rich manganese-based positive electrode material described in the first aspect of the present application or the lithium-rich manganese-based positive electrode material produced by the method described in the second aspect of the present application.

A fourth aspect of the present application provides a battery, comprising the positive electrode sheet described in the third aspect of the present application.

A fifth aspect of the present application provides an electronic device, comprising the battery described in the fourth aspect of the present application.

The electronic device of the present application comprises the battery provided by the present application, and thus has at least the same advantages as the battery.

The first and second particles of the lithium-rich manganese-based positive electrode material provided in the present application that meet the above conditions are not intended to be limited by any theory. The inventors have found that by adjusting the lithium-oxygen ratio R_{A} of the first particle to the above range, that is, by designing the first particle with a relatively low Li₂O/Li₂MnO₃ component, the first cycle irreversible capacity loss of the material can be effectively reduced as a whole; by designing the second particle with a higher Li₂O/Li₂MnO₃ component than the first particle and adjusting the lithium-oxygen ratio R_{B} of the second particle and the lithium-oxygen ratio R_{A} of the first particle to meet the above relationship, the second particle will serve as a capacity "sustained release agent" to continuously compensate for the capacity loss during the long cycle. In this way, through the synergistic cooperation between the first particle and the second particle, the long cycle performance of the lithium-rich manganese-based positive electrode material can be effectively improved.

### BRIEF DESCRIPTION OF DRAWINGS

FIG. 1 is a scanning electron microscope (SEM) image of the lithium-rich manganese-based positive electrode material of Example 1;
FIG. 2 is a particle size distribution (PSD) graph of the lithium-rich manganese-based positive electrode material of Example 1.

### DETAILED DESCRIPTION

In order to facilitate understanding of the present application, the present application will be described more comprehensively below. However, the present application can be implemented in many different forms and is not limited to the examples described herein. On the contrary, the purpose of providing these examples is to make the understanding of the disclosure of the present application more thorough and comprehensive.

For simplicity, the present application only explicitly discloses some numerical ranges. However, any lower limit can be combined with any upper limit to form an unclearly described range, any lower limit can be combined with other lower limits to form an unclearly described range, and any upper limit can be combined with any other upper limit to form an unclearly described range. In addition, although not clearly described, each point or single value between the range endpoints is included in the range. Therefore, each point or single value can be combined with any other point or single value as its own lower limit or upper limit or with other lower limits or upper limits to form an unclearly described range.

Unless otherwise defined, all technical and scientific terms used herein have the same meaning as those generally understood by those skilled in the art to which the present application belongs. The terms used herein in the specification of the present application are for the purpose of describing specific examples only and are not intended to limit the present application. It should be noted that, unless otherwise specified, the term "and/or" used herein comprises any and all combinations of one or more related listed items, and "above" and "below" are inclusive of the number, and the meaning of "more" in "one or more" is more than two.

The above application content of the present application is not intended to describe each disclosed embodiment or each implementation in the present application. The following description more specifically illustrates exemplary embodiments. In many places throughout the application, guidance is provided by a series of examples, which can be used in various combinations. In each example, enumeration is only used as a representative group and should not be interpreted as exhaustive.

During the research, the inventors find that the high specific capacity of the lithium-rich manganese-based laminated positive electrode material comes from the redox of oxygen ions during the activation of the Li₂MnO₃ component during the first charge, and the oxygen evolution caused by the redox of oxygen ions also leads to a large irreversible capacity loss in the first cycle. The irreversible migration of transition metal ions during the subsequent charge and discharge process will cause the crystal structure of the material to change from laminated to spinel structure, resulting in serious energy attenuation. Furthermore, with the increase of Li₂MnO₃ component content in the lithium-rich manganese-based laminated positive electrode material, the ionic/electronic conductivity of the material decreases, making the impedance larger, which will further deteriorate the rate performance and cycle performance of the material.

In order to solve the aforementioned technical problems, the inventors propose the following technical solutions of the present application.

A first aspect of the present application provides a lithium-rich manganese-based positive electrode material, comprising a first particle and a second particle, wherein the first particle satisfies chemical formula (1) and the second particle satisfies chemical formula (2):

aLi₂O·bLi₂MnO₃·cLiX_{α}X'_{β}O₂ (1),

xLi₂O·yLi₂MnO₃·zLiY_{γ}Y'_{δ}O₂ (2),

in formula (1), -0.1≤a≤0, 0<b≤0.4, b+a>0, b+c-a=1;
in formula (2), 0≤x≤0.1, 0.4≤y<1, x+y+z=1;
in formula (1) and formula (2), X and Y each independently include one or more of Ni and Co, X' and Y' each independently include one or more of Mn, Al, Na, Mg, B, Ti, Y, Zr, Nb, Sn, La, Ce, Ta and W, and 0≤β≤0.5≤α≤1, 0≤δ≤0.5≤γ≤1, α+β=1, γ+δ=1;
a lithium-oxygen ratio of the first particle is R_{A}=(2a+2b+c)/(a+3b+2c), and satisfies 1/2<R_{A}<7/12; and
a lithium-oxygen ratio of the second particle is R_{B}=(2x+2y+z)/(x+3y+2z), and satisfies R_{A}<R_{B}<5/7.

It should be noted that in the above chemical formula (1), the Li₂MnO₃ component completes the electrochemical activation in part via the reaction path of Li₂MnO₃→Li₂O+MnO₂ during the electrochemical activation process, but the reversibility of the reaction in this path is poor. Therefore, the component is adjusted in the form of a "Li₂O" defect (a takes a negative value) in the chemical formula to improve the reversibility of the electrochemical reaction of the first particle as a whole.

In some embodiments, -0.1≤a≤0, optionally, a may be -0.02, 0, -0.1 or within a range consisting of any of the above values.

In some embodiments, 0<b≤0.4, optionally, b may be 0.3, 0.35, 0.4 or within a range consisting of any of the above values.

In some embodiments, 0≤x≤0.1, optionally, x may be 0, 0.1, 0.05 or within a range consisting of any of the above values.

In some embodiments, 0.4≤y<1, optionally, y may be 0.4, 0.5, 0.6, 0.7, 0.95 or within a range consisting of any of the above values.

The first and second particles of the lithium-rich manganese-based positive electrode material provided in the present application that meet the above conditions are not intended to be limited by any theory. The inventors find in the research process that in the lithium-rich manganese-based material, the redox of oxygen ions provides charge compensation for the deintercalation of lithium ions, but the reversibility of the anion redox reaction is lower than that of traditional transition metal elements (such as Ni^{2+/3+/4+} or Co^{3+/4+}). Therefore, the Li/O ratio in the lithium-rich manganese-based material will have a great influence on the specific capacity and electrochemical reversibility of the material, and if the Li/O ratio is not in the appropriate range, it will manifest as rapid energy decay. The inventors further find that the first and second particles of the lithium-rich manganese-based positive electrode material of the present application are activated by losing lattice oxygen from the structure during the initial cycle. Since the oxidation of lattice oxygen will generate highly active O-O dimers or oxygen, the reaction product can react with the electrolyte and decompose, which will lead to irreversible capacity loss and low initial coulombic efficiency.

Accordingly, in the present application, by adjusting the lithium-oxygen ratio R_{A} of the first particle to the above range, that is, designing the first particle with a relatively low Li₂O/Li₂MnO₃ component, the oxidation of lattice oxygen can be reduced, thereby effectively reducing the irreversible capacity loss of the material in the first cycle as a whole. By designing the second particle with a higher Li₂O/Li₂MnO₃ component than that of the first particle and adjusting the lithium-oxygen ratio R_{B} of the second particle and the lithium-oxygen ratio R_{A} of the first particle to meet the above relationship, gradual activation and gradual release of lithium ions during the cycle can be achieved, so that the second particle will serve as a capacity "sustained release agent" to continuously compensate for the capacity loss during the long cycle. In this way, through the synergistic cooperation between the first particle and the second particle, the long cycle performance of the lithium-rich manganese-based positive electrode material can be effectively improved.

In some embodiments, in the lithium-rich manganese-based positive electrode material, the first particle and the second particle have a mass percentage of w_{A} and w_{B} respectively, the first particle and the second particle have a molar mass of M_{A} and M_{B} respectively, and a lithium-oxygen ratio of the lithium-rich manganese-based positive electrode material is R=(R_{A}w_{A}M_{B}+R_{B}w_{B}M_{A})/(w_{A}M_{B}+w_{B}M_{A}), and 0.5<R≤0.6, preferably 0.55≤R≤0.6.

The above relationship between the mass percentages w_{A} and w_{B} of the first particle and the second particle in the lithium-rich manganese-based positive electrode material and the lithium-oxygen ratio R of the lithium-rich manganese-based positive electrode material is beneficial to further enhance the coordination between the first particle and the second particle, and further improve the long cycle stability of the lithium-rich manganese-based positive electrode material.

In some embodiments, the second particle comprises a core and a shell covering at least a portion of the surface of the core, the core satisfies chemical formula (2), and the shell comprises a conductive carbon material.

The second particle has a relatively higher lithium-oxygen ratio R_{B}, that is, the second particle has a relatively higher Li₂O/Li₂MnO₃ component, which will affect the deintercalation of lithium ions and reduce the rate performance. Therefore, by coating the shell comprising a conductive carbon material on the surface of the core, the second particle can effectively improve the electron transmission capacity and the rate performance of the lithium-rich manganese-based positive electrode material.

In some embodiments, the specific surface area of the core is 0.1 m²/g to 3 m²/g. For example, the specific surface area may be 0.1 m²/g, 0.5 m²/g, 0.8 m²/g, 1 m²/g, 1.5 m²/g, 2 m²/g, 2.5 m²/g, 3 m²/g or within a range consisting of any of the above values.

The specific surface area of the inner core within the above range can control the reactivity of the second particle, enhance the effect of the capacity "sustained release agent" during long cycles, reduce the side reactions at the interface between the second particle with a high lithium-oxygen ratio (Li/O) and the electrolyte, and inhibit oxygen release.

In some embodiments, the mass percentage of the conductive carbon material in the second particle is 0.1% to 5%. For example, the mass percentage may be 0.1%, 0.5%, 0.7%, 1%, 2%, 3%, 4%, 5% or within a range consisting of any of the above values.

The mass percentage of the conductive carbon material in the second particle within the above range is beneficial to further improve the electron transmission capacity of the second particle and further improve the rate performance of the lithium-rich manganese-based positive electrode material.

In some embodiments, the conductive carbon material includes one or more of acetylene black, Ketjen black, conductive graphite, carbon fiber, graphene, multi-walled carbon nanotubes and single-walled carbon nanotubes.

In some embodiments, the first particle and the second particle each comprise a primary particle.

It should be noted that the "primary particle" mentioned in the present application refers to particles that have not been agglomerated during their formation process and whose particle size is close to the particle size of the crystal grains.

In some embodiments, an average particle size D'_{A} of the primary particle of the first particle and an average particle size D'_{B} of the primary particle of the second particle satisfy: D'_{A}<D'_{B}<2 µm.

In the present application, the particle size of the primary particle can be obtained by measuring the size using a scanning electron microscope (SEM).

The relationship between D'_{A} and D'_{B} can achieve a suitable match between the particle sizes of the first particle and the second particle, thereby further improving the long cycle performance of the material.

In some embodiments, a volume median particle size Dv50₁ of the first particle is 3 µm to 16 µm, and a volume median particle size Dv50₂ of the second particle is 2 µm to 7 µm.

In some embodiments, a specific surface area of the first particle is 1 m²/g to 5 m²/g, and a specific surface area of the second particle is 0.1 m²/g to 20 m²/g.

The volume median particle sizes and specific surface area distributions of the first particle and the second particle within the above range, combined with the aforementioned lithium-oxygen ratio design of the first particle and the second particle, can further effectively improve the capacity and long-cycle stability of the material.

In the present application, the core of the second particle has a larger primary particle and a smaller specific surface area than the first particle, thereby exhibiting a lower electrochemical activity. The relatively higher Li₂O/Li₂MnO₃ component of the second particle can be combined with the morphological characteristics of the second particle to achieve gradual activation during the cycle and release lithium ions, thereby reducing the loss of active lithium in the battery system.

In some embodiments, the volume median particle size Dv50 of the lithium-rich manganese-based positive electrode material is 3 µm to 16 µm.

In some embodiments, the specific surface area of the lithium-rich manganese-based positive electrode material is 1 m²/g to 5 m²/g.

In some embodiments, the water content in the lithium-rich manganese-based positive electrode material is <500 ppm.

Controlling the water content in the lithium-rich manganese-based positive electrode material helps avoid side reactions between the electrolyte and the electrode, reducing electrolyte decomposition and HF generation.

In some embodiments, the LiOH content in the lithium-rich manganese-based positive electrode material is <3000 ppm.

In some embodiments, the Li₂CO₃ content in the lithium-rich manganese-based positive electrode material is <3000 ppm.

Controlling the content of LiOH and Li₂CO₃ in the lithium-rich manganese-based positive electrode material can improve the processability of electrode slurry and reduce gas production in the battery.

A second aspect of the present application provides a method for producing the lithium-rich manganese-based positive electrode material described in the first aspect of the present application, comprising the following steps:
S1. mixing a first particle with a second particle to produce the lithium-rich manganese-based positive electrode material, wherein the first particle satisfies chemical formula (1) and the second particle satisfies chemical formula (2):

aLi₂O·bLi₂MnO₃·cLiX_{α}X'_{β}O₂ (1),

xLi₂O·yLi₂MnO₃·zLiY_{γ}Y'_{δ}O₂ (2),

in formula (1), -0.1≤a≤0, 0<b≤0.4, b+a>0, b+c-a=1;
in formula (2), 0≤x≤0.1, 0.4<y<1, x+y+z=1;
in formula (1) and formula (2), X and Y each independently include one or more of Ni and Co, X' and Y' each independently include one or more of Mn, Al, Na, Mg, B, Ti, Y, Zr, Nb, Sn, La, Ce, Ta and W, and 0≤β≤0.5≤α≤1, 0≤δ≤0.5≤γ≤1, α+β=1, γ+δ=1;
a lithium-oxygen ratio of the first particle is R_{A}=(2a+2b+c)/(a+3b+2c), and satisfies 1/2<R_{A}<7/12; and
a lithium-oxygen ratio of the second particle is R_{B}=(2x+2y+z)/(x+3y+2z), and satisfies R_{A}<R_{B}<5/7.

In some embodiments of the present application, the mass percentage of the first particle is w_{A}, and 60%≤w_{A}<100%, and the mass percentage of the second particle is w_{B}, and 0<w_{B}≤40%.

In the production method provided in the present application, the first particle and the second particle that meet the above conditions are mixed, and the mixing ratio of the two particles is optimized, that is, the mass percentage ratio of the two particles is controlled within an appropriate range, thereby effectively exerting the synergistic effect between the two particles and achieving effective improvement in the long cycle performance of the lithium-rich manganese-based positive electrode material.

In some embodiments, the first particle is produced by:
S10. subjecting a first mixture comprising a first precursor and a first lithium source to a first sintering treatment to produce the first particle, wherein the first precursor comprises manganese element, an X element, and an X' element.

In some embodiments, the first sintering treatment may comprise:
heating the first mixture to 300°C to 600°C at a heating rate of 1°C/min to 10°C/min, keeping at this temperature for 2 h to 8 h, then heating the first mixture to 750°C to 1000°C at a heating rate of 1°C/min to 10°C/min, and keeping at this temperature for 8 h to 20 h.

In the first sintering treatment, the mixture is first sintered at low temperature and then at high temperature, so that the particles can grow first, that is, the first lithium source melts and penetrates into the first precursor particles for a preliminary reaction to grow into fine primary particles. Then, they are fully fused, that is, the first lithium source decomposes to generate Li₂O and further reacts with the fine primary particles to fuse into large particles, thereby making the crystals of the produced lithium-rich manganese-based positive electrode material tend to be complete and have a stable structure.

In some embodiments, the first precursor includes one or more of a carbonate of manganese, an X element and an X' element, a hydroxide of manganese, an X element and an X' element, and an oxide of manganese, an X element and an X' element.

In some embodiments, the first lithium source includes one or more of lithium hydroxide, lithium carbonate, lithium nitrate, lithium chloride, lithium oxide and lithium peroxide.

In some embodiments, the ratio of the molar number of lithium element in the first lithium source to the total molar number of metal elements in the first precursor is 1.0-1.45:1.

In some embodiments, the specific surface area of the first precursor is 10 m²/g to 100 m²/g.

In some embodiments, the median particle size D50₁ of the first precursor is 3 µm to 16 µm.

In some embodiments, the second particle is produced by:
S20, subjecting a second mixture comprising a second precursor and a second lithium source to a second sintering treatment to obtain a sintered product, wherein the second precursor comprises manganese element, an Y element, and an Y' element;
S30. subjecting the sintered product to a coating treatment to produce the second particle.

In some embodiments, the second sintering treatment may comprise:
heating the second mixture to 300°C to 600°C at a heating rate of 1°C/min to 10°C/min, keeping at this temperature for 2 h to 8 h, then heating the second mixture to 900°C to 1200°C at a heating rate of 1°C/min to 10°C/min, keeping at this temperature for 1 h to 5 h, then cooling the second mixture to 700°C to 900°C, and keeping at this temperature for 6 h to 15 h.

In the second sintering treatment, the mixture is first sintered at low temperature, then at high temperature, and finally at low temperature, so that the particles grow first, that is, the second lithium source melts and penetrates into the second precursor particles for a preliminary reaction to grow into fine primary particles. Then, they are fully fused, that is, the second lithium source decomposes to generate Li₂O and further reacts with the fine primary particles to fuse into large particles. Finally, the elements are homogenized at low temperature, thereby making the crystals of the produced lithium-rich manganese-based positive electrode material tend to be complete and have a stable structure.

In some embodiments, the second precursor includes one or more of a carbonate of manganese, an Y element and an Y' element, a hydroxide of manganese, an Y element and an Y' element, and an oxide of manganese, an Y element and an Y' element.

In some embodiments, the second lithium source includes one or more of lithium hydroxide, lithium carbonate, lithium nitrate, lithium chloride, lithium oxide and lithium peroxide.

In some embodiments, the ratio of the molar number of lithium element in the second lithium source to the total molar number of metal elements in the second precursor is 1.4-2.25: 1.

In some embodiments, the specific surface area of the second precursor is 5 m²/g to 50 m²/g.

In some embodiments, the median particle size D50₂ of the second precursor is 1.5 µm to 8 µm.

It should be noted that in the lithium-rich manganese-based positive electrode material provided in the present application, the lithium-oxygen ratios R_{A} and R_{B} of the first particle and the second particle can be obtained by designing the components of the first precursor and the second precursor, and by regulating the ratio of lithium element in the lithium source to the total molar number of metal elements in the precursor.

In some embodiments, the coating treatment may comprise: mixing the sintered product with a conductive carbon material.

In some embodiments, the mass ratio of the conductive carbon material to the sintered product is (0.1-3): 100.

In some embodiments, the conductive carbon material includes one or more of acetylene black, Ketjen black, conductive graphite, carbon fiber, graphene, multi-walled carbon nanotubes and single-walled carbon nanotubes.

In some embodiments, the mixing method of mixing the sintered product with the conductive carbon material comprises at least one of mechanical mixing and liquid phase mixing.

In some embodiments, after the sintered product is mixed with the conductive carbon material, at least one of the following post-treatment steps is further comprised: stirring, drying or sieving the mixed mixture.

As a non-limiting example, liquid phase mixing may comprise: fully dissolving polyvinyl pyrrolidone (PVP) in ethylene glycol, producing an ethylene glycol solution of PVP with a mass proportion of PVP in the solution being 0.1 wt.% to 5 wt.%, adding a conductive carbon material, and stirring and dispersing the mixture for 30 min to 240 min; then, adding the sintered product and continuing to stir and disperse for 5 min to 60 min to produce a mixed solution with a mass proportion of the sintered product relative to ethylene glycol being 20 wt.% to 60 wt.%, vacuum filtering to obtain a filter cake, washing the filter cake with anhydrous ethanol solution 2-5 times, vacuum drying at a temperature of 80°C-300°C, and sieving to obtain a second particle.

A third aspect of the present application provides a positive electrode sheet, comprising the lithium-rich manganese-based positive electrode material described in the first aspect of the present application or the lithium-rich manganese-based positive electrode material produced by the method described in the second aspect of the present application.

A fourth aspect of the present application provides a battery, comprising the positive electrode sheet described in the third aspect of the present application.

In some embodiments, the battery further comprises a negative electrode sheet, an electrolyte, and a separator. During the charge and discharge process of the battery, lithium ions are intercalated and deintercalated back and forth between the positive electrode sheet and the negative electrode sheet. The electrolyte plays the role of conducting ions between the positive electrode sheet and the negative electrode sheet. The separator is arranged between the positive electrode sheet and the negative electrode sheet, mainly to prevent the positive and negative electrodes from short-circuiting, while allowing ions to pass through.

A fifth aspect of the present application provides an electronic device, comprising the battery described in the fourth aspect of the present application.

In some embodiments, the type of electronic device is not particularly limited, and it can be any electronic device known in the prior art. For example, the electronic device can include, but is not limited to, power tools, electric cars, laptop computers, pen-type computers, mobile computers, electronic book players, portable phones, portable fax machines, portable copiers, portable printers, etc.

### Examples

The following are specific examples, which more specifically describe the contents disclosed in the present application, and these examples are only for illustrative purposes, because various modifications and variations made within the scope of the disclosure of the present application are obvious to those skilled in the art. Unless otherwise stated, all parts, percentages, and ratios reported in the following examples are based on weight, and all reagents used in the examples are commercially available or synthesized according to conventional methods and can be used directly without further processing, and the instruments used in the examples are commercially available.

### Example 1

(1) Production of the first particle:
   S1: 1000 g of Ni_{0.35}Mn_{0.65}(OH)₂ precursor (specific surface area 32.0 m²/g, D50=10.0 µm), 524.75 g of lithium carbonate, 7.00 g of Co(OH)₂, 1.92 g of Al₂O₃, and 3.01 g of TiO₂ were mixed uniformly in a high-speed mixer. The molar ratio of Li to the total of Ni/Co/Mn metal ions was 1.28: 1. A mixture A was obtained.
   S2: The mixture A was calcined in an air atmosphere in stages, wherein in the first stage, it was calcined at 550°C for 6 h with a heating rate of 3°C/min; in the second stage, it was calcined at 850°C for 16 h with a heating rate of 3°C/min. A calcined product S_{A} was obtained.
   S3: The calcined product S_{A} was crushed by mechanical grinding and sieved with 325 mesh to obtain a first particle M_{A}, with a molecular formula of -0.02Li₂O·0.3Li₂MnO₃·0.68LiNi_{0.49}Co_{0.01}Mn_{0.49}Al_{0.005}Ti_{0.005}O₂, D50=9.8 µm, and specific surface area of 2.82 m²/g.
(2) Production of the second particle:
   S1: 1000 g of Ni_{0.25}Co_{0.10}Mn_{0.65}(OH)₂ precursor (specific surface area 15.5 m²/g, D50=3.5 µm), 618.96 g of lithium carbonate, 3.01 g of TiO₂, and 8.73 g of WO₃ were mixed uniformly in a high-speed mixer. The molar ratio of Li to the total of Ni/Co/Mn metal ions was 1.51: 1. A mixture B was obtained.
   S2: The mixture B was calcined in an air atmosphere in stages, wherein in the first stage, it was calcined at 550°C for 6 h with a heating rate of 3°C/min; in the second stage, it was calcined at 1050°C for 2 h with a heating rate of 4°C/min; in the third stage, it was calcined at 860°C for 10 h. A calcined product S_{B} was obtained. S_{B} was crushed by a jet mill and sieved with 325 mesh to obtain a sintered product P_{B}, i.e., the core of the second particle, with a molecular formula of 0.5Li₂MnO₃·0.5LiNi_{0.49}Co_{0.2}Mn_{0.3}Ti_{0.005}W_{0.005}O₂, D50=3.1 µm, and a specific surface area of 0.65 m²/g.
   S3: 10 g of polyvinyl pyrrolidone (PVP) was added to 1 L of ethylene glycol and completely dissolved. 10 g of conductive graphite was added, stirred and dispersed for 60 min. 1000 g of the sintered product P_{B} was added, stirred and dispersed for another 20 min. The mixture was subjected to vacuum filtration to obtain a filter cake. The filter cake was washed with anhydrous ethanol solution for 3 times to obtain a coated product. The coated product was vacuum dried at 120°C and sieved to obtain the second particle M_{B}.
(3) The first particle and the second particle were uniformly mixed in a mass ratio of 80:20 to obtain a lithium-rich manganese-based positive electrode material.

### Example 2

(1) Production of the first particle:
   S1: 1000 g of Ni_{0.325}Co_{0.325}Mn_{0.35}(OH)₂ precursor (specific surface area 11.5 m²/g, D50=16.0 µm), 312.30 g of LiOH·H₂O, and 275.10 g of lithium carbonate were mixed uniformly in a high-speed mixer. The molar ratio of Li to the total of Ni/Co/Mn metal ions was 1.36:1. A mixture A was obtained.
   S2: The mixture A was calcined in an air atmosphere in stages, wherein in the first stage, it was calcined at 300°C for 8 h with a heating rate of 5°C/min; in the second stage, it was calcined at 750°C for 20 h with a heating rate of 5°C/min. A calcined product S_{A} was obtained.
   S3: The calcined product S_{A} was crushed by mechanical grinding and sieved with 325 mesh to obtain a first particle M_{A}, with a molecular formula of 0.35Li₂MnO₃·0.65LiNi_{0.5}Co_{0.5}O₂, D50=15.58 µm, and a specific surface area of 1.22 m²/g.
(2) Production of the second particle:
   S1: 1000 g of Ni_{0.30}Co_{0.10}Mn_{0.60}(OH)₂ precursor (specific surface area 5.6 m²/g, D50=1.5 µm), 612.78 g of lithium carbonate, 1.48 g of Na₂CO₃, 1.12 g of MgO, 0.98 g of B₂O₃, and 3.42 g of ZrO₂ were mixed uniformly in a high-speed mixer. The molar ratio of Li to the total of Ni/Co/Mn metal ions was 1.52: 1. A mixture B was obtained.
   S2: The mixture B was calcined in an air atmosphere in stages, wherein in the first stage, it was calcined at 600°C for 8 h with a heating rate of 3°C/min; in the second stage, it was calcined at 1200°C for 1 h with a heating rate of 10°C/min; in the third stage, it was calcined at 900°C for 15 h. A calcined product S_{B} was obtained. S_{B} was crushed by a jet mill and sieved with 325 mesh to obtain a sintered product P_{B}, i.e., the core of the second particle, with a molecular formula of 0.5Li₂MnO₃·0.5LiNi_{0.59}Co_{0.195}Mn_{0.195}Na_{0.005}Mg_{0.005}B_{0.005}Zr_{0.005}O₂, D50=1.65 µm, and a specific surface area of 0.35 m²/g.
   S3: 1 g of polyvinyl pyrrolidone (PVP) was added to 1 L of ethylene glycol and completely dissolved. 0.25 g of graphene was added, stirred and dispersed for 30 min. 250 g of the sintered product P_{B} was added, stirred and dispersed for another 5 min. The mixture was subjected to vacuum filtration to obtain a filter cake. The filter cake was washed with anhydrous ethanol solution for 3 times to obtain a coated product. The coated product was vacuum dried at 80°C and sieved to obtain the second particle M_{B}.
(3) The first particle and the second particle were uniformly mixed in a mass ratio of 75:25 to obtain a lithium-rich manganese-based positive electrode material.

### Example 3

(1) Production of the first particle:
   S1: 1000 g of Mn_{0.30}Co_{0.70}(OH)₂ precursor (specific surface area 36.8 m²/g, D50=3.2 µm), 215.88 g of Li₂O, 3.90 g of Al₂O₃, 5.10 g of Nb₂O₅, and 8.45 g of Ta₂O₅ were mixed uniformly in a high-speed mixer. The molar ratio of Li to the total of Ni/Co/Mn metal ions was 1.32:1. A mixture A was obtained.
   S2: The mixture A was calcined in an air atmosphere in stages, wherein in the first stage, it was calcined at 600°C for 2 h with a heating rate of 10°C/min; in the second stage, it was calcined at 1000°C for 10 h with a heating rate of 10°C/min. A calcined product S_{A} was obtained.
   S3: The calcined product S_{A} was crushed by mechanical grinding and sieved with 325 mesh to obtain a first particle M_{A}, with a molecular formula of 0.3Li₂MnO₃·0.7LiCo_{0.98}Al_{0.01}Nb_{0.005}Ta_{0.005}O₂, D50=3.5 µm, and a specific surface area of 4.22 m²/g.
(2) Production of the second particle:
   S1: 1000 g of Ni_{0.53}Co_{0.02}Mn_{0.45}(OH)₂ precursor (specific surface area 5.2 m²/g, D50=6.5 µm), 687.07 g of lithium carbonate, 2.82 g of Al₂O₃, 8.30 g of SnO₂, and 9.48 g of CeO₂ were mixed uniformly in a high-speed mixer. The molar ratio of Li to the total of Ni/Co/Mn metal ions was 1.69: 1. A mixture B was obtained.
   S2: The mixture B was calcined in an air atmosphere in stages, wherein in the first stage, it was calcined at 600°C for 2 h with a heating rate of 10°C/min; in the second stage, it was calcined at 900°C for 5 h with a heating rate of 10°C/min; in the third stage, it was calcined at 700°C for 15 h. A calcined product S_{B} was obtained. S_{B} was crushed by a jet mill and sieved with 325 mesh to obtain a sintered product P_{B}, i.e., the core of the second particle, with a molecular formula of 0.1Li₂O·0.4Li₂MnO₃·0.5LiNi_{0.94}Co_{0.04}Al_{0.01}Sn_{0.005}Ce_{0.005}O₂, D50=6.28 µm, and a specific surface area of 1.35 m²/g.
   S3: 50 g of polyvinyl pyrrolidone (PVP) was added to 1 L of ethylene glycol and completely dissolved. 45 g of single-walled carbon nanotubes was added, stirred and dispersed for 240 min. 1500 g of the sintered product P_{B} was added, stirred and dispersed for another 60 min. The mixture was subjected to vacuum filtration to obtain a filter cake. The filter cake was washed with anhydrous ethanol solution for 3 times to obtain a coated product. The coated product was vacuum dried at 300°C and sieved to obtain the second particle M_{B}.
(3) The first particle and the second particle were uniformly mixed in a mass ratio of 65:35 to obtain a lithium-rich manganese-based positive electrode material.

### Example 4

(1) Production of the first particle:
   S1: 1000 g of Ni_{0.18}Co_{0.18}Mn_{0.64}CO₃ precursor (specific surface area 92.5 m²/g, D50=10.5 µm), 391.09 g of lithium carbonate, and 5.75 g of Nb₂O₅ were mixed uniformly in a high-speed mixer. The molar ratio of Li to the total of Ni/Co/Mn metal ions was 1.23:1. A mixture A was obtained.
   S2: The mixture A was calcined in an air atmosphere in stages, wherein in the first stage, it was calcined at 400°C for 4 h with a heating rate of 4°C/min; in the second stage, it was calcined at 865°C for 15 h with a heating rate of 4°C/min. A calcined product S_{A} was obtained.
   S3: The calcined product S_{A} was crushed by mechanical grinding and sieved with 325 mesh to obtain a first particle M_{A}, with a molecular formula of -0.1Li₂O·0.4Li₂MnO₃·0.5LiNi_{0.33}Co_{o.33}Mn_{o.33}Nb_{0.01}O₂, D50=10.23 µm, and a specific surface area of 2.17 m²/g.
(2) Production of the second particle:
   S1: 1000 g of Co_{0.36}Mn_{0.64}(OH)₂ precursor (specific surface area 15.12 m²/g, D50=4.2 µm), 813.13 g of LiOH·H₂O, 1.98 g of Al₂O₃, 1.75 g of Y₂O₃, and 3.79 g of La₂O₃ were mixed uniformly in a high-speed mixer. The molar ratio of Li to the total of Ni/Co/Mn metal ions was 1.75: 1. A mixture B was obtained.
   S2: The mixture B was calcined in an air atmosphere in stages, wherein in the first stage, it was calcined at 450°C for 5 h with a heating rate of 3°C/min; in the second stage, it was calcined at 900°C for 3 h with a heating rate of 5°C/min; in the third stage, it was calcined at 900°C for 15 h. A calcined product S_{B} was obtained. S_{B} was crushed by a jet mill and sieved with 325 mesh to obtain a sintered product P_{B}, i.e., the core of the second particle, with a molecular formula of 0.05Li₂O·0.6Li₂MnO₃·0.35LiCo_{0.98}Al_{0.01}Y_{0.004}La_{0.006}O₂, D50=4.07 µm, and a specific surface area of 0.72 m²/g.
   S3: 20 g of polyvinyl pyrrolidone (PVP) was added to 1 L of ethylene glycol and completely dissolved. 5 g of multi-walled carbon nanotubes was added, stirred and dispersed for 180 min. 1000 g of the sintered product P_{B} was added, stirred and dispersed for another 30 min. The mixture was subjected to vacuum filtration to obtain a filter cake. The filter cake was washed with anhydrous ethanol solution for 3 times to obtain a coated product. The coated product was vacuum dried at 100°C and sieved to obtain the second particle M_{B}.
(3) The first particle and the second particle were uniformly mixed in a mass ratio of 80:20 to obtain a lithium-rich manganese-based laminated material.

### Example 5

(1) Production of the first particle:
   S1: 1000 g of Ni_{0.30}Mn_{0.70}CO₃ precursor (specific surface area 87.5 m²/g, D50=9.8 µm), 379.32 g of lithium carbonate, and 4.85 g of Al₂O₃ were mixed uniformly in a high-speed mixer. The molar ratio of Li to the total of Ni/Co/Mn metal ions was 1.19:1. A mixture A was obtained.
   S2: The mixture A was calcined in an air atmosphere in stages, wherein in the first stage, it was calcined at 600°C for 2 h with a heating rate of 5°C/min; in the second stage, it was calcined at 900°C for 10 h with a heating rate of 10°C/min. A calcined product S_{A} was obtained.
   S3: The calcined product S_{A} was crushed by mechanical grinding and sieved with 325 mesh to obtain a first particle M_{A}, with a molecular formula of -0.1Li₂O·0.35Li₂MnO₃·0.55LiNi_{0.49}Mn_{0.49}Al_{0.02}O₂, D50=9.35 µm, and a specific surface area of 3.01 m²/g.
(2) Production of the second particle:
   S1: 1000 g of MnO₂ precursor (specific surface area 1.85 m²/g, D50=2.20 µm) and 589.95 g of Li₂O₂ were mixed uniformly in a high-speed mixer. The molar ratio of Li to the total of Ni/Co/Mn metal ions was 2.23:1. A mixture B was obtained.
   S2: The mixture B was calcined in an air atmosphere in stages, wherein in the first stage, it was calcined at 400°C for 2 h with a heating rate of 3°C/min; in the second stage, it was calcined at 1000°C for 2 h with a heating rate of 3°C/min; in the third stage, it was calcined at 850°C for 15 h. A calcined product S_{B} was obtained. S_{B} was crushed by a jet mill and sieved with 325 mesh to obtain a sintered product P_{B}, i.e., the core of the second particle, with a molecular formula of 0.05Li₂O·0.95Li₂MnO₃, D50=2.35 µm, and a specific surface area of 1.42 m²/g.
   S3: 1000 g of the sintered product P_{B} and 10 g of graphene were mixed uniformly in a high-speed mixer, and then the mixture was sieved to obtain the second particle M_{B}.
(3) The first particle and the second particle were uniformly mixed in a mass ratio of 70:30 to obtain a lithium-rich manganese-based laminated material.

### Example 6

The production method was similar to that of Example 1, except that step S3 in the production of the second particle was omitted.

### Comparative Example 1

The production method was similar to that of Example 1, except that the production steps of the second particle were omitted, and the lithium-rich manganese-based laminated material only comprised the first particle.

### Comparative Example 2

The production method was similar to that of Example 1, except that the production steps of the first particle were omitted, and the lithium-rich manganese-based laminated material only comprised the second particle.

### Comparative Example 3

The production method was similar to that of Example 1, except that the amount of lithium carbonate added in the production process of the first particle was adjusted to 389.46 g, so that the first particle had a molecular formula of Li_{0.92}Ni_{0.34}Co_{0.01}Mn_{0.64}Al_{0.005}Ti_{0.005}O₂, D50=10.2 µm, and a specific surface area of 1.14 m²/g.

### Comparative Example 4

The production method was similar to that of Example 1, except that the amount of lithium carbonate added in the production process of the first particle was adjusted to 804.00 g, so that the first particle had a molecular formula of 0.24Li₂O·0.23Li₂MnO₃·0.53LiNi_{0.49}Co_{0.01}Mn_{0.49}Al_{0.005}Ti_{0.005}O₂, D50=9.8 µm, and a specific surface area of 2.59 m²/g.

The lithium-rich manganese-based positive electrode materials in the above examples and comparative examples were produced into button cells or soft-pack batteries for electrochemical performance tests. The production method was as follows:
(1) Production of a button cell: The produced positive electrode material powder was mixed with acetylene black, carbon nanotubes, and polyvinylidene fluoride in a mass ratio of 95:2:1:2, added with an appropriate amount of N-methylpyrrolidone as a dispersant, and ground into slurry. The slurry was then evenly coated on an aluminum foil, and vacuum dried at 120°C for 12 h. The dried electrode sheet was rolled with a roller mill, and the aluminum foil was cut with a slicer into circular electrode sheets with a diameter of 10 mm. The loading amount of the active material was controlled at about 10 mg/cm². The half-cell was assembled in an argon atmosphere glove box, with a water partial pressure of ≤0.1 ppm and an oxygen partial pressure of ≤0.1 ppm. With metallic lithium used as the counter electrode and a 1 mol/L LiPF₆ (EC/DMC, volume ratio of 1:1) solution used as the electrolyte, a button cell with a specification of CR2032 was assembled.
(2) Production of a soft-pack battery: The produced positive electrode material powder was mixed with acetylene black, carbon nanotubes, and polyvinylidene fluoride in a mass ratio of 95:2:1:2, added with an appropriate amount of N-methylpyrrolidone as a dispersant, and ground into slurry. The slurry was then coated on both sides of an aluminum foil and vacuum dried at 120°C for 12 h. The negative electrode was composed of graphite (MCMB), Super-P, CMC, and styrene-butadiene rubber in a weight ratio of 94:2:2:2. The average load density of the positive and negative electrodes was approximately 20 mg/cm² and 13 mg/cm², respectively. The battery capacity was designed as approximately 1 Ah, and the capacity balance N/P ratio of the positive and negative electrode was set at about 1.10.

The lithium-rich manganese-based positive electrode materials produced in Examples 1 to 6 and Comparative Examples 1 to 4 or the batteries further produced therefrom were subjected to relevant performance tests, and the test results are shown in Tables 1 to 3 below.

The test conditions or test standards for each performance test item are as follows:
(1) Morphology characterization: The sample morphology was observed using scanning electron microscopy (SEM), and the primary particle size of the material was measured and recorded.
(2) Particle size detection method: The particle size of each sample was detected using a particle size analyzer. Specific detection parameters: solvent refractive index of 1.33 and 3 times of the tests.
(3) Specific surface area detection method: The specific surface area of each sample was measured using a specific surface area detector and the nitrogen low-temperature adsorption method.
(4) LiOH and Li₂CO₃ content detection: referring to GB/T 41704-2022.
(5) Trace water detection: The water content of the material was measured by Karl Fischer titration.
(6) ICP deetction: The positive electrode material sample was dissolved in HCl and produced into a solution of a certain concentration. The content of metal elements in the material was detected using inductively coupled plasma atomic emission spectrometry.
(7) Test method for first-cycle charge/discharge specific capacity and rate performance: The button cell was charged and discharged at 25°C using a constant current charge/discharge mode, with a voltage range of 2.3-4.55 V and a current density of 50 mA/g, i.e., a rate of 0.2C. After the button cell was charged and discharged five times at a rate of 0.2C, it was then charged and discharged using current densities of 0.2C, 1C, 2C, and 5C, to obtain the rate performance of the button cells in Table 3.
(8) Test of energy retention rate, voltage decay and direct current internal resistance (DCR): The soft-pack battery was subjected to a charge and discharge cycle test at 25°C using a constant current charge/discharge mode, with a voltage range of 2.3-4.5V and a constant current charging current density of 125 mA/g. After charging to 4.5V, the battery was charged with a constant voltage. When the current density dropped to 5 mA/g, charging was terminated and the discharge step began. Energy retention rate after 400 cycles = (400-cycle discharge specific energy/first-cycle discharge specific energy) × 100%.
Voltage decay after 400 cycles = 400-cycle discharge specific energy/400-cycle discharge specific capacity - first-cycle discharge specific energy/first-cycle discharge specific capacity.
(9) The direct current (DC) internal resistance test was conducted using the HPPC method in the FreedomCAR project "Power Assisted Hybrid Electric Vehicle Power Battery Test Manual" to test the DC internal resistance at 50% SOC during discharge. The DC internal resistance growth rate after 400 cycles = (400-cycle DCR - first-cycle DCR)/ first-cycle DCR × 100%.

**Table 1**

| | | Example 1 | Example 2 | Example 3 | Example 4 | Example 5 | Example 6 | Comparative Example 1 | Comparative Example 2 | Comparative Example 3 | Comparative Example: 4 |
|---|---|---|---|---|---|---|---|---|---|---|---|
| First paticle | R_{A} | 0.55 | 0.57 | 0.57 | 0.52 | 0.51 | 0.55 | 0.55 | / | 0.46 | 0.74 |
| | M_{A} | 99.44 | 104.42 | 103.88 | 92.15 | 90.24 | 99.44 | 99.44 | / | 94.46 | 85.73 |
| | Dv50₁ (µm) | 9.80 | 15.58 | 3.50 | 10.23 | 9.35 | 9.80 | 9.80 | / | 10.2 | 9.8 |
| | Specific surface area (m²/g) | 2.82 | 1.22 | 4.22 | 2.17 | 3.01 | 2.82 | 2.82 | / | 1.14 | 2.59 |
| Second particle | R_{B} | 0.60 | 0.60 | 0.65 | 0.65 | 0.69 | 0.60 | / | 0.60 | 0.60 | 0.60 |
| | M_{B} | 106.98 | 106.67 | 98.73 | 105.94 | 112.5 | 106.98 | / | 106.98 | 106.98 | 106.98 |
| | Dv50₂ (µm) | 3.41 | 1.67 | 6.52 | 4.23 | 2.37 | 3.10 | / | 3.41 | 3.41 | 3.41 |
| | Specific surface area (m²/g) | 4.06 | 1.59 | 12.72 | 3.23 | 5.98 | 0.65 | / | 4.06 | 4.06 | 4.06 |
| | Conductive carbon material content | 1.0% | 0.1% | 3.0% | 0.5% | 1.0% | / | / | 1.0% | 1.0% | 1.0% |
| | Core particle size (µm) | 3.1 | 1.65 | 6.28 | 4.07 | 2.35 | / | / | 3.1 | 3.1 | 3.1 |
| | Core specific surface area (m²/g) | 0.65 | 0.35 | 1.35 | 0.72 | 1.42 | / | / | 0.65 | 0.65 | 0.65 |
| Lithium-rich manganese -based positive electrode material | W_{A} | 80% | 75% | 65% | 80% | 70% | 80% | / | / | 80% | 80% |
| | W_{B} | 20% | 25% | 35% | 20% | 30% | 20% | / | / | 20% | 20% |
| | R | 0.56 | 0.58 | 0.60 | 0.55 | 0.56 | 0.56 | / | / | 0.49 | 0.72 |
| | Dv50 (µm) | 8.61 | 11.69 | 2.64 | 8.81 | 6.95 | 8.61 | / | / | 8.68 | 8.42 |
| | Specific surface area (m²/g) | 3.02 | 2.81 | 4.73 | 2.68 | 3.4 | 2.74 | / | / | 2.01 | 2.64 |
| | H₂O(ppm) | 243 | 409 | 438 | 237 | 370 | 268 | / | / | 433 | 360 |
| | LiOH (ppm) | 740 | 1484 | 2436 | 1066 | 1792 | 811 | / | / | 560 | 4133 |
| | Li₂CO₃ (ppm) | 1134 | 1914 | 1098 | 1906 | 982 | 1059 | / | / | 1050 | 2275 |

**Table 2**

| | First-cycle charge specific capacity (mAh/g) | First-cycle discharge specific capacity (mAh/g) | First-cycle coulombic efficiency (%) | Energy retention rate after 400 cycles (%) | Voltage decay after 400 cycles (mV) | DCR growth rate after 400 cycles (%) |
|---|---|---|---|---|---|---|
| Example 1 | 295.2 | 262.1 | 88.8 | 88.9 | 418.8 | 91.1 |
| Example 2 | 306.7 | 273.6 | 89.2 | 91.4 | 368.0 | 109.4 |
| Example 3 | 297.1 | 272.4 | 91.7 | 92.1 | 405.6 | 108.4 |
| Example 4 | 289.0 | 257.8 | 89.2 | 87.8 | 394.0 | 98.0 |
| Example 5 | 310.7 | 280.6 | 90.3 | 90.1 | 412.8 | 129.0 |
| Example 6 | 302.9 | 252.3 | 83.3 | 82.5 | 485.2 | 295.3 |
| Comparative Example 1 | 300.5 | 248.2 | 82.6 | 81.6 | 492.7 | 243.7 |
| Comparative Example 2 | 336.9 | 270.9 | 80.4 | 70.3 | 530.5 | 393.8 |
| Comparative Example 3 | 286.3 | 156.6 | 54.7 | 67.7 | 498.6 | 366.6 |
| Comparative Example 4 | 345.9 | 217.4 | 62.9 | 50.1 | 644.5 | 419.0 |

**Table 3**

| | 0.2C discharge specific capacity (mAh/g) | 1C discharge specific capacity (mAh/g) | 2C discharge specific capacity (mAh/g) | 5C discharge specific capacity (mAh/g) |
|---|---|---|---|---|
| Example 1 | 261.5 | 252.1 | 223 | 201.5 |
| Example 2 | 274.4 | 263.1 | 237.7 | 212.7 |
| Example 3 | 273.3 | 262.1 | 243 | 216.7 |
| Example 4 | 258.7 | 246.2 | 226.9 | 203.6 |
| Example 5 | 281.2 | 268.8 | 244.8 | 216.9 |
| Example 6 | 270.6 | 237.6 | 191.2 | 122 |
| Comparative Example 1 | 248.5 | 221.6 | 176.5 | 114.6 |
| Comparative Example 2 | 251.7 | 215.1 | 171.5 | 103.4 |
| Comparative Example 3 | 155.8 | 130.2 | 101.3 | 60.9 |
| Comparative Example 4 | 217.9 | 128.1 | 96.2 | 54.0 |

It can be seen from Tables 2 to 3 that, compared with Comparative Examples 1 and 2, the overall electrochemical performance of the Examples after 400 cycles is higher than that of the comparative examples, which shows that the present application can synergistically improve the long-cycle performance of the material by finely controlling the lithium-oxygen ratio, particle size, specific surface area and other properties of the first particle and the second particle in the lithium-rich manganese-based positive electrode material.

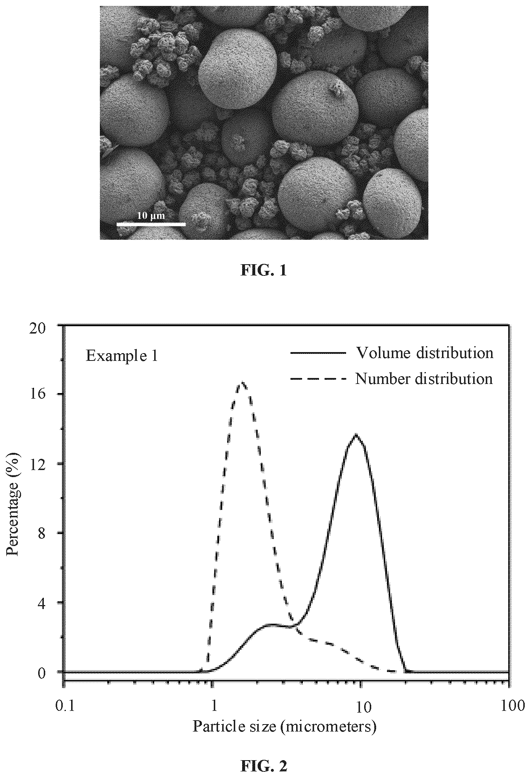

In addition, the positive electrode material of Example 1 was subjected to a particle size distribution (PSD) test to obtain a PSD graph of the positive electrode material provided in Example 1 (as shown in FIG. 2). The positive electrode material provided in Example 1 had a continuous bimodal particle size distribution within a particle size range of 1 to 13 µm. In addition, the positive electrode material of Example 1 was subjected to a scanning electron microscope (SEM) test to obtain a SEM image of the positive electrode material provided in Example 1 (as shown in FIG. 1). The particles included the first particles and second particles, and the surface of the second particle was coated with a small amount of carbon layer. Both types of particles were formed by agglomeration of primary particles. D_{A'} was approximately 30 nm, and D_{B'} was approximately 300 nm.

The technical features of the above-described examples may be arbitrarily combined. To make the description concise, not all possible combinations of the technical features in the above-described examples are described. However, as long as there is no contradiction in the combination of these technical features, they should be considered to be within the scope of this specification.

The above-mentioned examples only express several embodiments of the present application, and the descriptions thereof are relatively specific and detailed, but they cannot be understood as limiting the scope of the disclosure patent. It should be noted that, for a person of ordinary skill in the art, several variations and modifications can be made without departing from the concept of the present application, and these all belong to the protection scope of the present application. Therefore, the protection scope of the present application shall be subject to the attached claims.

## Claims

1. A lithium-rich manganese-based positive electrode material, comprising a first particle and a second particle, wherein the first particle is represented by chemical formula (1) and the second particle is represented by chemical formula (2):
aLi₂O·bLi₂MnO₃·cLiX_{α}X'_{β}O₂ (1),
xLi₂O·yLi₂MnO₃·zLiY_{γ}Y'_{δ}O₂ (2),
in formula (1), -0.1≤a≤0, 0<b≤0.4, b+a>0, b+c-a=1;
in formula (2), 0≤x≤0.1, 0.4≤y<1, x+y+z=1;
in formula (1) and formula (2), X and Y each independently include one or more of Ni and Co, X' and Y' each independently include one or more of Mn, Al, Na, Mg, B, Ti, Y, Zr, Nb, Sn, La, Ce, Ta and W, and 0≤β≤0.5≤α≤1, 0≤δ≤0.5≤γ≤1, α+β=1, γ+δ=1;
a lithium-oxygen ratio of the first particle is R_{A}=(2a+2b+c)/(a+3b+2c), and 1/2<R_{A}<7/12; and
a lithium-oxygen ratio of the second particle is R_{B}=(2x+2y+z)/(x+3y+2z), and R_{A}<R_{B}<5/7.

2. The lithium-rich manganese-based positive electrode material according to claim 1, wherein, in the lithium-rich manganese-based positive electrode material, the first particle and the second particle have a mass percentage of w_{A} and w_{B} respectively, the first particle and the second particle have a molar mass of M_{A} and M_{B} respectively, and a lithium-oxygen ratio of the lithium-rich manganese-based positive electrode material is R=(R_{A}w_{A}M_{B}+R_{B}w_{B}M_{A})/(w_{A}M_{B}+w_{B}M_{A}), and 0.5<R≤0.6.

3. The lithium-rich manganese-based positive electrode material according to claim 1 or 2, wherein the second particle comprises a core and a shell covering at least a portion of the surface of the core, the core is represented by chemical formula (2), and the shell comprises a conductive carbon material;
optionally, a specific surface area of the core is 0.1 m²/g to 3 m²/g;
optionally, a mass percentage of the conductive carbon material in the second particle is 0.1% to 5%;
optionally, the conductive carbon material includes one or more of acetylene black, Ketjen black, conductive graphite, carbon fiber, graphene, multi-walled carbon nanotubes and single-walled carbon nanotubes.

4. The lithium-rich manganese-based positive electrode material according to claim 3, wherein the first particle and the second particle each independently comprise a primary particle;
optionally, an average particle size D'_{A} of the primary particle of the first particle and an average particle size D'_{B} of the primary particle of the second particle satisfy: D'_{A}<D'_{B}<2 µm;
optionally, a volume median particle size Dv50₁ of the first particle is 3 µm to 16 µm, and a volume median particle size Dv50₂ of the second particle is 2 µm to 7 µm;
optionally, a specific surface area of the first particle is 1 m²/g to 5 m²/g, and a specific surface area of the second particle is 0.1 m²/g to 20 m²/g.

5. The lithium-rich manganese-based positive electrode material according to claim 1 or 2, satisfying at least one of the following conditions:
(1) a volume median particle size Dv50 of the lithium-rich manganese-based positive electrode material is 3 µm to 16 µm;
(2) a specific surface area of the lithium-rich manganese-based positive electrode material is 1 m²/g to 5 m²/g;
(3) a water content in the lithium-rich manganese-based positive electrode material is <500 ppm;
(4) a LiOH content in the lithium-rich manganese-based positive electrode material is <3000 ppm;
(5) a Li₂CO₃ content in the lithium-rich manganese-based positive electrode material is <3000 ppm.

6. A method for producing a lithium-rich manganese-based positive electrode material, comprising:
mixing a first particle with a second particle to produce the lithium-rich manganese-based positive electrode material, wherein the first particle is represented by chemical formula (1) and the second particle is represented by chemical formula (2):
aLi₂O·bLi₂MnO₃·cLiX_{α}X'_{β}O₂ (1),
xLi₂O·yLi₂MnO₃·zLiY_{γ}Y'_{δ}O₂ (2),
in formula (1), -0.1≤a≤0, 0<b≤0.4, b+a>0, b+c-a=1;
in formula (2), 0≤x≤0.1, 0.4<y<1, x+y+z=1;
in formula (1) and formula (2), X and Y each independently include one or more of Ni and Co, X' and Y' each independently include one or more of Mn, Al, Na, Mg, B, Ti, Y, Zr, Nb, Sn, La, Ce, Ta and W, and 0≤β≤0.5≤α≤1, 0≤δ≤0.5≤γ≤1, α+β=1, γ+δ=1;
a lithium-oxygen ratio of the first particle is R_{A}=(2a+2b+c)/(a+3b+2c), and1/2<R_{A}<7/12; and
a lithium-oxygen ratio of the second particle is R_{B}=(2x+2y+z)/(x+3y+2z), andR_{A}<R_{B}<5/7.

7. The method according to claim 6, wherein the first particle is produced by:
subjecting a first mixture comprising a first precursor and a first lithium source to a first sintering treatment to produce the first particle, wherein the first precursor comprises manganese element, an X element, and an X' element;
optionally, the first sintering treatment comprises:
heating the first mixture to 300°C to 600°C at a heating rate of 1°C/min to 10°C/min, keeping at this temperature for 2 h to 8 h, then heating the first mixture to 750°C to 1000°C at a heating rate of 1°C/min to 10°C/min, and keeping at this temperature for 8 h to 20 h;
optionally, the first precursor includes one or more of a carbonate of manganese, an X element and an X' element, a hydroxide of manganese, an X element and an X' element, and an oxide of manganese, an X element and an X' element;
optionally, the first lithium source includes one or more of lithium hydroxide, lithium carbonate, lithium nitrate, lithium chloride, lithium oxide and lithium peroxide;
optionally, a ratio of the molar number of lithium element in the first lithium source to the total molar number of metal elements in the first precursor is 1.0-1.45:1;
optionally, a specific surface area of the first precursor is 10 m²/g to 100 m²/g;
optionally, a median particle size D50₁ of the first precursor is 3 µm to 16 µm.

8. The method according to claim 6 or 7, wherein the second particle is produced by:
subjecting a second mixture comprising a second precursor and a second lithium source to a second sintering treatment to obtain a sintered product, wherein the second precursor comprises manganese element, an Y element, and an Y' element;
subjecting the sintered product to a coating treatment to produce the second particle;
optionally, the second sintering treatment comprises:
heating the second mixture to 300°C to 600°C at a heating rate of 1°C/min to 10°C/min, keeping at this temperature for 2 h to 8 h, then heating the second mixture to 900°C to 1200°C at a heating rate of 1°C/min to 10°C/min, keeping at this temperature for 1 h to 5 h, then cooling the second mixture to 700°C to 900°C, and keeping at this temperature for 6 h to 15 h;
optionally, the second precursor includes one or more of a carbonate of manganese, an Y element and an Y' element, a hydroxide of manganese, an Y element and an Y' element, and an oxide of manganese, an Y element and an Y' element;
optionally, the second lithium source includes one or more of lithium hydroxide, lithium carbonate, lithium nitrate, lithium chloride, lithium oxide and lithium peroxide;
optionally, a ratio of the molar number of lithium element in the second lithium source to the total molar number of metal elements in the second precursor is 1.4-2.25:1;
optionally, a specific surface area of the second precursor is 5 m²/g to 50 m²/g;
optionally, a median particle size D50₂ of the second precursor is 1.5 µm to 8 µm.

9. The method according to claim 8, wherein the coating treatment comprises:
mixing the sintered product with a conductive carbon material;
optionally, a mass ratio of the conductive carbon material to the sintered product is (0.1-3): 100;
optionally, the conductive carbon material includes one or more of acetylene black, Ketjen black, conductive graphite, carbon fiber, graphene, multi-walled carbon nanotubes, and single-walled carbon nanotubes.

10. A positive electrode sheet, comprising the lithium-rich manganese-based positive electrode material according to any one of claims 1 to 5 or the lithium-rich manganese-based positive electrode material produced by the method according to any one of claims 6 to 9.

11. A battery, comprising the positive electrode sheet according to claim 10.

12. An electronic device, comprising the battery according to claim 11.
